# EUROPEAN PATENT SPECIFICATION

(11) **EP 2 685 090 B1**
(45) Date of publication and mention of the grant of the patent: **14.06.2017**
(21) Application number: 12175650.6
(22) Date of filing: 10.07.2012
(51) Int. Cl.: F03D 1/00, F03D 13/25, F03D 13/10, B23K 20/12, B23K 101/00

(54) **A method for manufacturing a wind turbine structure and a wind turbine structure**
Verfahren zum Herstellen einer Windturbinenstruktur und Windturbinenstruktur
Procédé de fabrication d'une structure de turbine éolienne et structure de turbine éolienne

(43) Date of publication of application: 15.01.2014
(73) Proprietor: Siemens Aktiengesellschaft, 80333 München (DE)
(72) Inventor: Stege, Jason, 7330 Brande (DK)

(56) References cited:
- EP-A2- 2 211 052
- EP-A2- 2 211 054
- US-A- 4 087 038
- US-A1- 2012 137 623

## Description

A method for manufacturing a wind turbine structure and a wind turbine structure.

The present invention relates to a method for manufacturing a wind turbine structure, namely a jacket substructure, and to a wind turbine structure, namely a jacket substructure.

Jacket substructures are used for the installation of offshore wind turbines in water depths generally between 20 and 50 m. Such a jacket substructure connects a base of the wind turbine to the seafloor. The jacket substructure may in turn be connected to a number of piles, for example concrete piles, driven into the seafloor.

Known jacket substructures comprise cast iron nodes connecting steel pipes extending at different angles to one another. The steel pipes are connected to the cast iron nodes using bolts.

EP 2 211 052 A2 describes a system for creating a lattice type structure using friction forge bonds to connect the tower members. The system includes a rotary actuator for engaging and rotating a fastener to create frictional heat at a forge interface between the fastener and two or more workpieces. The system also includes a press that forces the fastener against the workpieces to be bonded, and a heater that may provide additional heating of the fastener and the opening.

US 2012/0137623 A1 describes a structural section for a tower mast and a method for manufacturing the section. The section comprises a sheet comprising a first end, a second end and a body disposed between the first end and the second end. A plurality of profiles is formed within the body, each profile comprising a deformation offset from the body. A fastener is configured to contact the first end to the second end to facilitate forming the body about a longitudinal axis and facilitate radially positioning the plurality of profiles around the longitudinal axis.

EP 2 211 054 A2 describes a wind turbine rotor including a first portion of a shaft fabricated from a first steel alloy having a first strength property value. The wind turbine rotor also includes a second portion of the shaft fabricated from a second steel alloy having a second strength property value. The first strength property value is greater than the second strength property value. The second portion of the shaft is welded to the first portion of the shaft.

One objective of the present invention is to provide an improved method of manufacturing, the wind turbine structure, which allows using low-cost materials and, at the same time, is low in labor cost.

Accordingly, a method for manufacturing a wind turbine structure, namely a jacket substructure for connecting a base of a wind turbine tower to a seafloor is provided. The method comprises connecting a first and a second component to each other by friction welding.

As used herein, "friction welding" refers to a solid state welding process that generates heat through mechanical friction between a moving and a stationary component, with the addition of a lateral force to plastically displace and fuse the components.

Friction welding has a number of benefits when applied to wind turbine structures or jacket substructures, in particular. First, it is a fast process. Further, the heat-affected zones are small. Also, friction welding is generally melt-free, which avoids grain growth. Another major advantage of friction welding is that it allows joining dissimilar materials. This means that the first and a second component may be designed from different low-cost materials, which at the same time satisfy specific requirements (for example specific loading conditions) of the first and second component. Thus, a cost-effective solution is obtained. And, as opposed to bolting as explained in the introductory section, little manual labor is involved in a friction welding process. Thus, the solution also reduces labor cost.

According to an embodiment, the first component comprises cast iron and/or the second component comprises steel. Casting is a process that allows manufacturing complex geometries at low cost - as opposed to machining such components for example. Thus, a first component formed as a node may be manufactured at low cost. Further, steel is a cheap material for manufacturing components that may be formed by extrusion such as pipes, for example. In particular cast iron and steel components may be connected reliably by friction welding.

The first component is a node, and the second component is a pipe. The node is configured to have two or more pipes connected thereto. In particular, the pipes may extend at different angles from the node. A number of nodes and pipes may be connected to one another by friction welding to form the wind turbine structure, namely the jacket substructure.

The node and the pipe are connected at their respective end faces. Preferably, the lateral force applied during friction welding is applied in a direction perpendicular to the respective end faces.

According to a further embodiment, the end faces each have a ring shape. The rings may be of a circular nature.

The first and second component are pressed into each other during friction welding, whereby a recess is formed in the first component receiving the second component. "Pressing" corresponds to the lateral force applied during friction welding as mentioned above. By having the second component received in the recess of the first component, the wind turbine structure becomes even more stable. For example, the recess can absorb bending moments, while the friction weld is substantially not loaded. In addition, if the friction weld should fail, the recess ensures that still some forces and/or moments may be transferred from the first component to the second component, thus preventing the wind turbine structure from collapsing.

According to a further embodiment, the first component has a flange and the second component is pressed into the flange. In this way, the recess may be formed easily. When the second component is arranged in the recess, the flange may enclose the second component at its entire perimeter. The recess may also be formed in the second component, the recess receiving the first component. The explanations apply mutatis mutandis to this embodiment.

According to a further embodiment, the first component is friction welded in cast condition. This means that the first component is not machined prior to friction welding. This saves another manufacturing step and therefore manufacturing cost.

The friction welding is configured as rotational friction or angular friction welding. "Rotational friction welding" means that the one component is spun at high speed relative to the other component. That is, the one component performs a number of revolutions. In "angular friction welding", the one component is rotated only a couple of degrees, i.e. less than 360°, with respect to the other component which is stationary.

Further, a wind turbine structure, namely a jacket substructure for connecting a base of a wind turbine tower to a seafloor, comprising a first and a second component connected to each other by a friction weld, is provided.

According to an embodiment, the first component comprises cast iron and/or the second component comprises steel. The first component may entirely or only in parts consist of cast iron. Also, the second component may entirely or only in parts consist of steel.

The first component is a node and/or the second component is a pipe.

The first and second component are connected at their respective end faces to each other.

The first component comprises a recess in which the second component is received.

According to the embodiment, the first component is connected to the second component inside the recess by the friction weld. Thus, the friction weld is protected inside the recess from outside influences, for example mechanical or chemical influences. This may increase the lifetime of the wind turbine structure.

"A wind turbine" presently refers to an apparatus converting the wind's kinetic energy into rotational energy, which may again be converted to electrical energy by the apparatus.

Further objects, features and advantages of the present invention will become apparent from the subsequent description and depending claims, taken in conjunction with the accompanying drawings, in which:
Fig. 1 is a perspective view of a wind turbine according to one embodiment;
Fig. 2 shows, in a perspective view, one step according to a method for manufacturing a wind turbine structure;
Fig. 3 shows, in a cross-section, a further step according to the method;
Fig. 4 shows, in a cross-section, one step according to a method for manufacturing a wind turbine structure according to a further embodiment; and
Fig. 5 shows, in a cross-section, a further step according to the method of Fig. 4.

In the Figures, like reference numerals designate like or functionally equivalent elements, unless otherwise indicated.

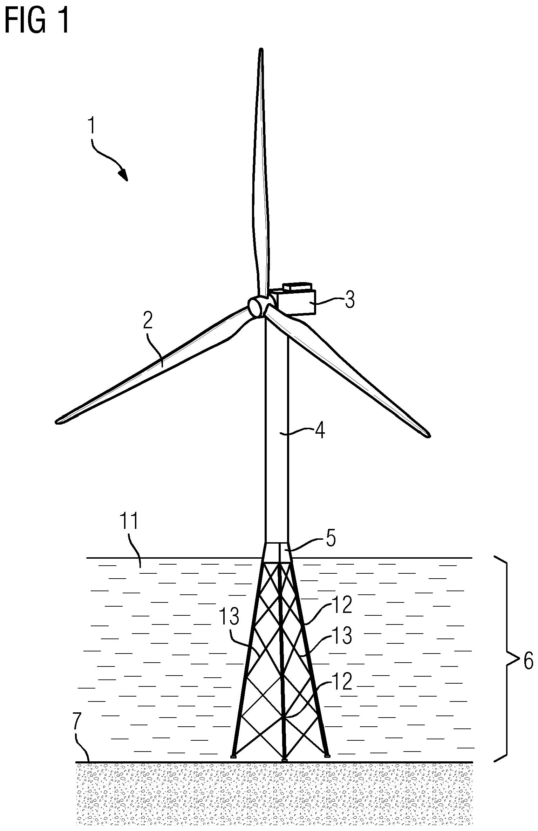

Fig. 1 shows a wind turbine 1 according to an embodiment.

The wind turbine 1 comprises a rotor 2 connected to a generator (not shown) arranged inside a nacelle 3. The nacelle 3 is arranged at the upper end of a tower 4 of the wind turbine 1. The tower 4 has a base 5 at its lower end connected to a jacket substructure 6. The jacket substructure 6 connects the base 5 to the seafloor 7. A number of piles (not shown) may have been driven into the seafloor 7. The jacket substructure 6 may be connected at its bottom to the piles. Typically, the jacket substructure 6 will be fully immersed in sea water 11 with the tower 4 holding the rotor 2 above the surface of the sea.

The jacket substructure 6 may comprise a number of nodes 12 connecting a number of pipes 13 to one another. Typically, the nodes 12 and the pipes 13 form triangles with one another which make up the jacket substructure 6.

The jacket substructure 6 is preferably manufactured on land. However, it is also possible to manufacture the jacket substructure 6 on a vessel, for example close to the installation site of the wind turbine 1.

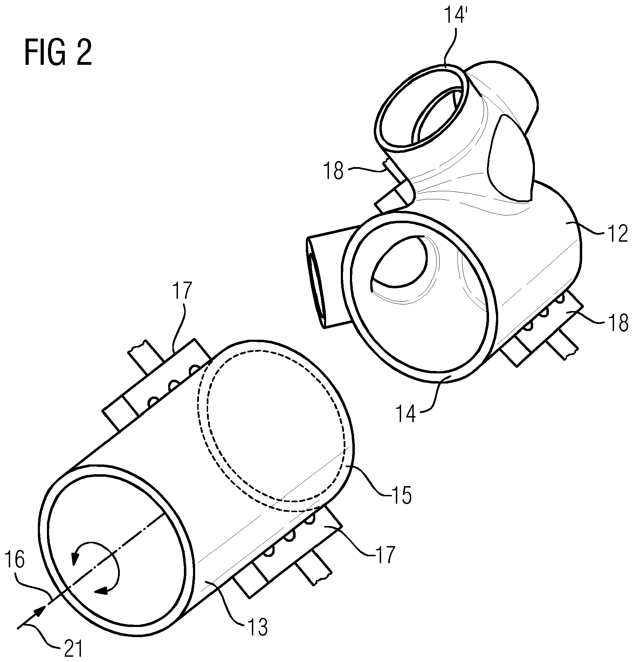

Fig. 2 illustrates a step in manufacturing the jacket substructure 6. In particular, Fig. 2 illustrates how two components, a first component formed as a node 12
and a second component formed as a steel pipe 13, are connected to each other.

The node 12 has a number of end faces 14, 14' facing in different directions. Each end face 14, 14' is configured to connect a steel pipe 13 at a respective end face 15 thereto. Fig. 2 illustrates how a pipe 13 is connected at its end face 15 to the end face 14 of the node 12. To this end, the pipe 13 and the node 12 are rotated with respect to each other. For example, the pipe 13 may be rotated about its center axis 16. This rotation may be a small rotation about an angle smaller than 360°, for example 100°, or the pipe 13 may be spun at a high speed around the center axis 16. The node 12 and the pipe 13 may each be clamped by clamping means 17, 18, for example clamping brackets. While rotating, the pipe 13 is pushed with its end face 15 against the end face 14 of the node 12 by a force 21 acting along the center axis 16, for example.

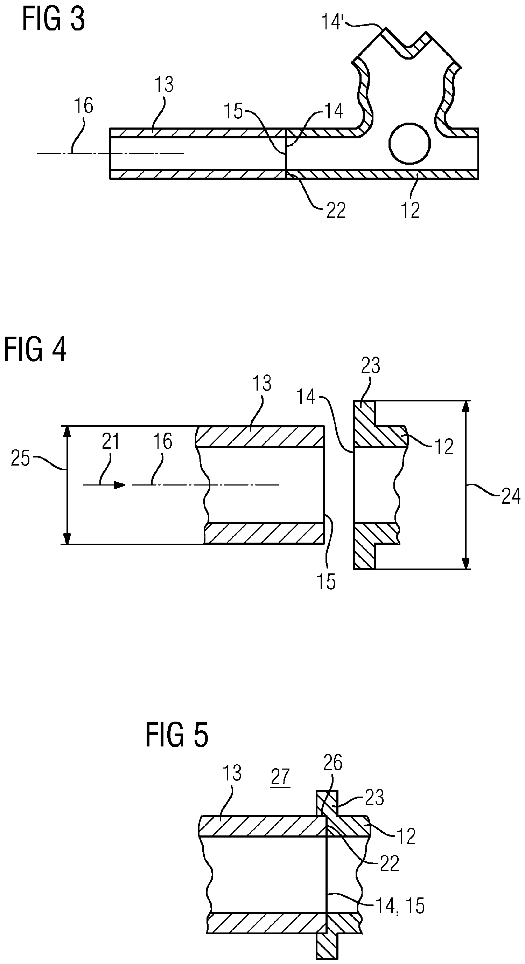

As a result of the rotation and the force 21 being applied, the end faces 14, 15 are friction welded to each other. This is shown in Fig. 3, which illustrates a cross-section of the pipe 13 and the node 12 after friction welding. The corresponding friction weld is indicated by the reference numeral 22.

The node 12 may be manufactured from cast iron and is friction welded to the pipe 13 in its cast condition. The pipe 13 is preferably made of steel. At least the end faces 14, 15 are comprised of cast iron and steel, respectively.

The end faces 14, 15 are each ring-shaped and of a circular nature. In particular, the pipe 13 has a circular cross-section.

Figs. 4 and 5 illustrate a method for manufacturing the jacket substructure 6 according to a further embodiment.

According to the embodiment of Figs. 4 and 5, the node 12 has a flange 23 at its one end forming the end face 14. Also, the flange 23 has a larger diameter 24 than the pipe 13. The pipe's diameter (which also corresponds to the outer diameter of the end face 15) is indicated at 25.

During friction welding, the pipe 13 is pressed by the force 21 into the flange 23. This results in a step-shaped recess 26 (see Fig. 5) being formed in the flange 23. After friction welding, the recess 26 receives the pipe 13 at its end. The friction weld 22 connecting the end faces 14, 15 lies within the recess 26 and is therefore not accessible from the outside 27. Even without the friction weld 22 or, when the friction weld 22 has failed, the recess 26 with the end of the pipe 13 arranged therein ensures that some forces or bending moments can be transferred between the pipe 13 and the node 12.

Although the present invention has been described in accordance with preferred embodiments, it is obvious for a person skilled in the art that modifications are possible in all embodiments.

## Claims

1. A method for manufacturing a wind turbine structure, namely a jacket substructure (6) for connecting a base (5) of a wind turbine tower (4) to a seafloor (7), wherein a pipe (13) and a node (12), the node (12) being configured to have two or more pipes (13) connected thereto, are connected to each other by friction welding, wherein the node (12) and the pipe (13) are connected at their respective end faces (14, 15), wherein the node and the pipe (12, 13) are pressed into each other during friction welding, whereby a recess (26) is formed in the node (12) receiving the pipe (13), wherein the friction welding is configured as rotational friction or angular friction welding and therefore the pipe (13) and the node (12) are rotated with respect to each other.

2. The method of claim 1, wherein the node (12) comprises cast iron and/or the pipe (13) comprises steel.

3. The method of claim 1 or 2, wherein the end faces (14, 15) each have a ring shape.

4. The method of one of claims 1 to 3, wherein the node (12) has a flange (23) and the pipe (13) is pressed into the flange (23).

5. The method of one of claims 2 to 4, wherein the node (12) is friction welded in cast condition.

6. A wind turbine structure, namely a jacket substructure (6) for connecting a base (4) of a wind turbine tower (4) to a seafloor (7), comprising a pipe (13) and a node (12), the node (12) being configured to have two or more pipes (13) connected thereto, wherein the node (12) and the pipe (13) are connected to each other by a friction weld (22), wherein the node (12) and the pipe (13) are connected at their respective end faces (14, 15) to each other, wherein the node (12) comprises a recess (26) in which the pipe (13) is received, wherein the node (12) is connected to the pipe (13) inside the recess (26) by the friction weld (22), wherein the friction weld is configured as rotational friction or angular friction weld and has been obtained by rotating the pipe (13) and the node (12) with respect to each other, wherein said recess (26) has been formed by pressing the node (12) and the pipe (13) into each other during friction welding.

7. The wind turbine structure of claim 6, wherein the node (12) comprises cast iron and the pipe (13) comprises steel.

## Patentansprüche

1. Verfahren zum Herstellen einer Windturbinenkonstruktion, insbesondere einer Jacket-Unterkonstruktion (6), zum Verbinden eines Fußes (5) eines Windturbinenturms (4) mit einem Meeresgrund (7), wobei ein Rohr (13) und eine Verbindungsstelle (12), die so konfiguriert ist, dass sich zwei oder mehr Rohre (13) damit verbinden lassen, durch Reibschweißen miteinander verbunden werden, wobei die Verbindungsstelle (12) und das Rohr (13) an ihren jeweiligen Stirnflächen (14, 15) miteinander verbunden sind, wobei die Verbindungsstelle und das Rohr (12, 13) beim Reibschweißen ineinandergedrückt werden, wobei in der Verbindungsstelle (12) eine Vertiefung (26) gebildet wird, die das Rohr (13) aufnimmt, wobei das Reibschweißen als Rotations- oder Angular-Vibrationsreibschweißen konfiguriert ist und das Rohr (13) und die Verbindungsstelle (12) daher in Bezug zueinander gedreht werden.

2. Verfahren nach Anspruch 1, wobei die Verbindungsstelle (12) Gusseisen und/oder das Rohr (13) Stahl umfasst.

3. Verfahren nach Anspruch 1 oder 2, wobei die Stirnflächen (14, 15) jeweils eine Ringform aufweisen.

4. Verfahren nach einem der Ansprüche 1 bis 3, wobei die Verbindungsstelle (12) einen Flansch (23) aufweist und das Rohr (13) in den Flansch (23) gepresst wird.

5. Verfahren nach einem der Ansprüche 2 bis 4, wobei die Verbindungsstelle (12) im gegossenen Zustand reibgeschweißt wird.

6. Windturbinenkonstruktion, insbesondere Jacket-Unterkonstruktion (6), zum Verbinden eines Fußes (4) eines Windturbinenturms (4) mit einem Meeresgrund (7), wobei die Konstruktion ein Rohr (13) und eine Verbindungsstelle (12) umfasst, die so konfiguriert ist, dass sich zwei oder mehr Rohre (13) damit verbinden lassen, wobei die Verbindungsstelle (12) und das Rohr (13) über eine Reibschweißnaht (22) miteinander verbunden sind, wobei die Verbindungsstelle (12) und das Rohr (13) an ihren jeweiligen Stirnflächen (14, 15) miteinander verbunden sind, wobei die Verbindungsstelle (12) eine Vertiefung (26) umfasst, in der das Rohr (13) aufgenommen ist, wobei die Verbindungsstelle (12) über die Reibschweißnaht (22) in der Vertiefung (26) mit dem Rohr (13) verbunden ist, wobei die Reibschweißnaht als Rotations- oder Angular-Vibrationsreibschweißnaht konfiguriert ist und durch Drehen des Rohrs (13) und der Verbindungsstelle (12) in Bezug zueinander entsteht, wobei die Vertiefung (26) durch Ineinanderpressen der Verbindungsstelle (12) und des Rohrs (13) beim Reibschweißen gebildet wurde.

7. Windturbinenkonstruktion nach Anspruch 6, wobei die Verbindungsstelle (12) Gusseisen und das Rohr (13) Stahl umfasst.

## Revendications

1. Procédé de fabrication d'une structure de turbine éolienne, à savoir une sous-structure d'enveloppe (6) permettant de relier une base (5) d'une tour de turbine éolienne (4) à un fond marin (7), dans lequel une conduite (13) et un noeud (12), noeud (12) étant conçu pour avoir deux conduites (13), ou plus, reliées à celui-ci, sont reliés l'un à l'autre par soudage par friction, dans lequel le noeud (12) et la conduite (13) sont reliés au niveau de leurs faces d'extrémité respectives (14, 15), dans lequel le noeud et la conduite (12, 13) sont comprimés l'un dans l'autre pendant un soudage par friction, un creux (26) est ainsi formé dans le noeud (12) recevant la conduite (13), dans lequel le soudage par friction est conçu comme un soudage par friction rotative ou friction angulaire et par conséquent, la conduite (13) et le noeud (12) sont tournés l'un par rapport à l'autre.

2. Procédé selon la revendication 1, dans lequel le noeud (12) comporte de la fonte et/ou la conduite (13) comporte de l'acier.

3. Procédé selon la revendication 1 ou 2, dans lequel les faces d'extrémité (14, 15) présentent chacune une forme en anneau.

4. Procédé selon l'une des revendications 1 à 3, dans lequel le noeud (12) comporte une bride (23) et la conduite (13) est comprimée dans la bride (23).

5. Procédé selon l'une des revendications 2 à 4, dans lequel le noeud (12) est soudé par friction dans une condition de coulée.

6. Structure de turbine éolienne, à savoir une sous-structure d'enveloppe (6) permettant de relier une base (5) d'une tour de turbine éolienne (4) à un fond marin (7), comprenant une conduite (13) et un noeud (12), le noeud (12) étant conçu pour avoir deux conduites (13), ou plus, reliées à celui-ci, dans lequel le noeud (12) et la conduite (13) sont reliés l'un à l'autre par soudage par friction (22), dans lequel le noeud (12) et la conduite (13) sont reliés au niveau de leurs faces d'extrémité respectives (14, 15) l'un à l'autre, dans lequel le noeud (12) comprend un creux (26) dans lequel la conduite (13) est reçue, dans lequel le noeud (12) est relié à la conduite (13) à l'intérieur du creux (26) par le soudage par friction (22), dans lequel le soudage par friction est conçu comme un soudage par friction rotative ou friction angulaire et a été obtenu en tournant la conduite (13) et le noeud (12) l'un par rapport à l'autre, dans lequel ledit creux (26) a été formé en comprimant le noeud (12) et la conduite (13) l'un dans l'autre pendant le soudage par friction.

7. Structure de turbine éolienne selon la revendication 6, dans lequel le noeud (12) comporte de la fonte et la conduite (13) comporte de l'acier.
